# EUROPÄISCHE PATENTSCHRIFT

(11) **EP 3 682 431 B1**
(45) Veröffentlichungstag und Bekanntmachung des Hinweises auf die Patenterteilung: **05.10.2022**
(21) Anmeldenummer: 18765411.6
(22) Anmeldetag: 31.08.2018
(51) Int. Cl.: G08B 21/02, G08B 21/24

(54) **VERFAHREN ZUM BETREIBEN EINES KRAFTFAHRZEUGS MIT ZUMINDEST EINER AUSSENKAMERA SOWIE KRAFTFAHRZEUG MIT ZUMINDEST EINER AUSSENKAMERA**
METHOD FOR OPERATING A MOTOR VEHICLE HAVING AT LEAST ONE EXTERIOR CAMERA AND MOTOR VEHICLE HAVING AT LEAST ONE EXTERIOR CAMERA
PROCÉDÉ DE FONCTIONNEMENT D'UN VÉHICULE À MOTEUR POURVU D'AU MOINS UNE CAMÉRA EXTERNE AINSI QUE VÉHICULE À MOTEUR POURVU D'AU MOINS UNE CAMÉRA EXTERNE

(30) Priorität: 14.09.2017 DE 102017121376
(43) Veröffentlichungstag der Anmeldung: 22.07.2020
(73) Patentinhaber: Motherson Innovations Company Limited, London EC2N 2AX (GB)
(72) Erfinder: LIESENER, Alf, 70327 Stuttgart (DE); GÖTTLICHER, Stefanie, 70327 Stuttgart (DE)
(74) Vertreter: Jones Day
(86) Internationale Anmeldenummer: PCT/EP2018/073465
(87) Internationale Veröffentlichungsnummer: WO 2019/052837

(56) Entgegenhaltungen:
- EP-A1- 2 682 315
- EP-A1- 3 166 302
- EP-A2- 1 901 116
- WO-A1-2016/116231
- DE-A1-102010 046 396
- DE-A1-102015 209 976
- JP-A- 2012 106 557

## Beschreibung

Die Erfindung betrifft ein Verfahren zum Betreiben eines Kraftfahrzeugs mit zumindest einer Außenkamera sowie ein Kraftfahrzeug mit zumindest einer Außenkamera und mit einer Steueroder Regeleinrichtung, die dazu ausgelegt ist, ein derartiges Verfahren durchzuführen.

In modernen Kraftfahrzeugen finden zunehmend Außenkameras Anwendung, die einem Fahrer des Kraftfahrzeugs zusätzliche visuelle Informationen über das Umfeld des Kraftfahrzeugs zur Verfügung stellen sollen oder als Informationsquellen für Fahrerassistenzsysteme dienen sollen. Hierbei handelt es sich beispielsweise um Heckkameras, Rückblickkameras, die gegebenenfalls auch einen Außenrückspiegel des Kraftfahrzeugs ersetzen können, Frontsichtkameras als Datenquelle für Fahrerassistenzsystem und dergleichen. Solche Kameras können im Kameragehäuse Lichtquellen wie Leuchtdioden aufweisen.

Eine Rückblickvorrichtung für ein Kraftfahrzeug liefert ein mindestens den gesetzlichen Vorschriften entsprechendes Bild des hinteren Bereiches des Kraftfahrzeugs und gehört zu einer Untergruppe von Vorrichtungen für eine indirekte Sicht. Diese liefern Bilder und Ansichten von Objekten, die sich nicht im direkten Sichtfeld eines Fahrers befinden, das heißt in Richtungen entgegengesetzt, links, rechts, unterhalb und/oder oberhalb der Blickrichtung des Fahrers. Der Blick des Fahrers kann insbesondere auch in Blickrichtung nicht vollständig zufriedenstellend sein, zum Beispiel können sich Sichtbehinderungen durch Fahrzeugteile des eigenen Fahrzeuges, wie zum Beispiel durch Teile der Karosserie, insbesondere der A-Säule, der Dachkonstruktion und/oder der Motorhaube, und Sichtbehinderungen durch andere Fahrzeuge und/oder Gegenstände außerhalb des Fahrzeugs ergeben, die die Sicht derart behindern können, dass der Fahrer eine Fahrsituation nicht vollständig zufriedenstellend bzw. nur unvollständig erfassen kann. Außerdem ist es möglich, dass der Fahrer nicht in der Lage ist, die sich ihm in oder abseits der Blickrichtung präsente Situation so zu erfassen, wie es nötig wäre, um das Fahrzeug der Situation entsprechend zu kontrollieren. Daher kann eine Rückblickvorrichtung auch derart ausgestaltet sein, dass sie die Informationen entsprechend den Fähigkeiten des Fahrers aufbereitet, um ihm eine bestmögliche Erfassung der Situation zu ermöglichen.

Verschiedene Funktionen und Geräte können in Rückblickvorrichtungen eingebaut und/oder mit Hilfe von Rückblickvorrichtungen gesteuert werden, wobei insbesondere auch Kameras umfasst sind. Besonders nützlich sind Funktionen und Geräte zur Verbesserung, Erweiterung und/oder Aufrechterhaltung der Funktionalität der Rückblickvorrichtung bei normalen oder extremen Bedingungen. Hierbei können Heiz- und/oder Kühleinrichtungen, Reinigungsmittel wie Wischer, flüssige und/oder gasförmige Sprays, Aktuatormittel zum Bewegen der Rückblickvorrichtung oder Teile davon, wie beispielsweise eine Anzeige, ein Kamerasystem und/oder Teile von einem Kamerasystem, umfassend beispielsweise Linsen, Filter, Lichtquellen, adaptive Optiken wie zum Beispiel verformbare Spiegel, Sensoren und/oder Spiegel, und /oder Aktuatormittel zur Induktion von Bewegungen von anderen Objekten, beispielsweise Teile des Fahrzeugs und/oder Gegenstände, die das Fahrzeug umgeben, umfasst sein.

Weiterhin kann die Rückblickvorrichtung lineare Führungen und/oder rotierende Räder, wie beispielsweise ein Filterrad, zum Austauschen optischer Elemente, beispielsweise umfassend Linsen, Spiegel, Lichtquellen, Sensoren, adaptive Optiken wie verformbaren Spiegeln und/oder Filter, umfassen.

In Rückblickvorrichtungen können weitere Einrichtungen integriert sein, und/oder es können weitere Einrichtungen mit Hilfe von Rückblickvorrichtungen gesteuert werden, wie zum Beispiel jede Art von Lichtmodul, umfassend ein externes Lichtmodul, ein internes Lichtmodul, ein Frontlicht, ein Rücklicht, ein Nebelscheinwerfer, ein Bremslicht, ein Beschleunigungslicht, ein Blinklicht, ein Logolicht, eine Vorfeldbeleuchtung, ein Bodenlicht, ein Pfützenlicht, ein Blitzlicht, ein Navigationslicht, ein Positionslicht, ein Notlicht, ein Scheinwerfer, ein grünes Licht, ein rotes Licht, ein Warnlicht, ein Blinklicht-Lichtmodul, ein Annäherungslicht, ein Suchlicht, ein Informationslicht, eine Anzeige und/oder dergleichen. Weitere Beispiele für Funktionen und Vorrichtungen, die in Rückblickvorrichtungen integriert und/oder mit Hilfe von Rückblickvorrichtungen gesteuert werden, können beispielsweise ein Müdigkeits-Erkennungssystem, ein Sekundenschlaf-Erkennungssystem, ein Abstands- und/oder Geschwindigkeitsbestimmungssystem, beispielsweise ein LIDAR (Lichtdetektion und Abstandserfassung) System, ein Toter-Winkel-Indikationssystem, ein Spurwechsel-Assistenzsystem, ein Navigationsassistenzsystem, ein Tracking-Assistent-System, ein Mensch-Maschine-Interaktionssystem, ein Maschinen-Maschinen-Interaktionssystem, ein Not- und Vorsichtsmaßnahmen-Assistenzsystem, wie ein Unfallvermeidungs-Assistenzsystem, ein Gegenmaßnahmen-Assistenzsystem, ein Bremsassistenzsystem, ein Lenkassistenzsystem, ein Beschleunigungsassistenzsystem, ein Fluchtassistenzsystem, das beispielsweise ein Schleudersitzsystem umfasst, ein Richtungsanzeiger, ein Toter-Winkel-Indikator, ein Annäherungssystem, ein Notbremssystem, eine Ladestatusanzeige, ein Fahrzeugmodus System, das beispielsweise ein Sport-Modus System, ein Economy-Modus System, ein Autonomes-Fahr-Modus System, ein Schlaf-Modus System und/oder ein Anti-Diebstahl-System umfasst, ein Fahrzeug-Verschlossen Indikationssystem, eine Fahrzeug-Gestohlen Anzeige, ein Warnsignal-System, ein Temperatur-Indikator-System, eine Wetterindikationssystem, ein Ampel-Signalsystem, ein Kraftstoff-Statussystem und/oder beliebige Kombination davon umfassen.

Beleuchtungseinrichtungen für Rückblickvorrichtungen und/oder Lichtleiter dazu sind in der deutschen Patentanmeldung Nr. 102012108488, in der deutschen Patentanmeldung Nr. 102012104529, in der deutschen Patentanmeldung Nr. 102012107833, in der deutschen Patentanmeldung Nr. 102012107834, in dem europäischen Patent Nr. 2738043, in dem europäischen Patent Nr. 2947378, in der internationalen Patentanmeldung Nr. 2015/173695, in der europäischen Patentanmeldung Nr. 3045944, in der US-Patentanmeldung Nr. 15 / 228,566, in der US-Patentanmeldung Nr. 15 / 000,733, in der internationalen Patentanmeldung Nr. 2016/147154, in der US-Patentanmeldung Nr. 15 / 256,532, in der deutschen Patentanmeldung Nr. 102015115555, in der europäischen Patentanmeldung Nr. 3144183, der Anmelderin beschrieben.

Ein Kameramodul kann insbesondere eine Vielzahl von verschiedenen optischen Elementen, die unter anderem eine Vielzahl von verschiedenen Sensoren und Lichtquellen umfasst, sowie Gehäuseteilen aufweisen. Das Gehäuse eines Kameramoduls kann aus Kunststoff, Metall, Glas, einem anderen geeigneten Material und/oder aus einer beliebigen Kombination davon hergestellt sein und kann in Kombination mit den unten beschriebenen Techniken zum Ändern oder Modifizieren der Eigenschaften des Materials oder der Materialoberfläche verwendet werden. Gehäuse sind beispielsweise in der deutschen Patentanmeldung Nr. 102016108247.3 offenbart.

Die Kamera kann beispielsweise CCD- oder CMOS- oder Lichtfeldsensoren umfassen, wie sie beispielsweise in der deutschen Patentanmeldung Nr. 102011053999 und dem US-Patent Nr. 6,703,925 beschrieben sind. Auch kann ein Bereich des Sensors für verschiedene Zwecke reserviert werden, um beispielsweise einen Teststrahl zu detektieren, wie in dem US-Patent Nr. 8,031,224 offenbart.

Die optischen Elemente können aus irgendeiner Art von Glas oder irgendeinem anderen geeigneten Material geformt oder gestaltet sein. Glas wird hier im Sinne eines nichtkristallinen amorphen Festkörpers verwendet, der einen Glasübergang zeigt, wenn er in Richtung des flüssigen Zustandes erhitzt wird. Es umfasst beispielsweise die Gruppe der Polymergläser, Metallgläser, Siliciumdioxid-Gläser, aber auch jedes andere geeignete Material, das den Glasübergang zeigt, kann ebenfalls verwendet werden. Das Glas kann entweder flach, keilförmig, rechteckig, zylindrisch, sphärisch, konisch, elliptisch und/oder kreisförmig sein, wie es beispielsweise in der deutschen Patentanmeldung Nr. 102016108247.3 und der deutschen Patentanmeldung Nr. 102011103200 beschrieben ist, oder eine Form nach den unterschiedlichen Bedürfnissen oder Linsen-Typen haben. Als nicht einschränkende Beispiele können Kameramodule mit Linsen ausgerüstet werden, wie beispielsweise eine Weitwinkel- oder Fischaugenlinse, die geeignet ist, Peripheriebilder bereitzustellen, wie in der US-Patentanmeldung Nr. 15 / 281,780 und der US-Patentanmeldung Nr. 13 / 090,127 beschrieben, eine Fresnel-Linse oder Mikrolinsen, wie in der deutschen Patentanmeldung Nr. 102011053999 beschrieben, oder eine TIR (Total interne Reflexionslinse), wie in dem US-Patent Nr. 8,740,427 beschrieben. Eine andere Art von optischen Elementen, die bekanntermaßen in Kameramodulen verwendet werden, sind optische Fasern, insbesondere in Form von Faserbündeln und vorzugsweise in Form von Faserbündeln mit einem optischen Kopf, wie beispielsweise in der US-Patentanmeldung Nr. 09 / 771,140 beschrieben. Es können verschiedene Verfahren verwendet werden, um solche optischen Elemente herzustellen, wie beispielsweise das Verfahren, das in dem US-Patent 8,460,060 beschrieben wird. Die optischen Elemente können transparent sein, wie beispielsweise in dem US-Patent Nr. 8,031,224, der deutschen Patentanmeldung Nr. 102016108247.3 und der US-Patentanmeldung Nr. 13 / 242,829 beschrieben. Aber die optischen Elemente können auch semitransparent sein, wie in der US-Patentanmeldung Nr. 09 / 771,140 und der US-Patentanmeldung Nr. 13 / 090,127 beschrieben. Weiterhin können die optischen Elemente vollständig oder teilweise mit unterschiedlichen Arten von Beschichtungen beschichtet werden, um unterschiedliche Effekte zu realisieren, wie beispielsweise Antireflexionsbeschichtungen, siehe das US-Patent Nr. 8,031,224, Reflexionsbeschichtungen auf Chrombasis, siehe das US-Patent Nr. 9,181,616, und andere Beschichtungen, wie beispielsweise für polymerische Substrate in der US-Patentanmeldung Nr. 14 / 936,024 und in US-Patentanmeldung Nr. 15 / 124,310 beschrieben. Vorzugsweise bestehen die optischen Elemente aus einem kratzfesten Material, wie es beispielsweise in der deutschen Patentanmeldung Nr. 102016108247.3 beschrieben ist. Die optischen Elemente können an bestimmten Stellen der optischen Elemente Auskopplungsstrukturen aufweisen, und ein optischer Film, beispielsweise ein Extrusionsfilm, und eine geformte Beschichtung kann, wie in der deutschen Patentanmeldung Nr. 102011103200 beschrieben, aufgebracht werden. Eine Beschichtung zur Spektral- und Spannungskontrolle ist in der US-Patentanmeldung Nr. 15 / 124,310 beschrieben. Verschiedene Filter können in die optischen Elemente integriert werden, wie beispielsweise Graufilter oder Polarisationsfilter, die in der US-Patentanmeldung Nr. 14 / 809,509 beschrieben sind. Elektrochrome Substrate, Polymerelektrolyte und andere ladungsleitende Medien können für die optischen Elemente auf der Grundlage der Beschreibungen umfasst sein, wie in der europäischen Patentanmeldung Nr. 08103179.1, dem Europäisches Patent Nr. 2202826, dem US-Patent Nr. 7,999,992 und dem US Patent Nr. 8,537,451 offenbart.

Das Kameramodul kann auch mit Geräten zur Lichtintensitätsregulierung ausgestattet sein, wie beispielsweise in der US-Patent Anmeldung Nr. 14 / 809,509 beschrieben und Lichtpegelverstärkeröhren, wie in US Patentanmeldung Nr. 09 / 771,140 beschrieben, aufweisen. Die elektrochromen Substrate und Vorrichtungen, die in der europäischen Patentanmeldung Nr. 08103179.1, dem europäischen Patent Nr. 2202826, dem US-Patent Nr. 7,999,992 und dem US-Patent Nr. 8,537,451 verwendet werden, können auch für diesen Zweck verwendet werden, genauso wie ein Transflektor zum Transmittieren oder Reflektieren von Licht auf der Grundlage eines entsprechenden Eingangssignals, wie in der deutschen Patentanmeldung Nr. 102016106126.3 beschrieben.

Das Kameramodul oder eine an das Kameramodul angepasste Abdeckung kann mit verschiedenen Aktuatoren, Antrieben und/oder einer flexiblen Bahn bewegt werden, wie beispielsweise in der deutschen Anmeldung Nr. 102016108247.3 und der US-Patentanmeldung Nr. 15 / 281,780 beschrieben. Weiterhin kann das Kameramodul auch Reinigungselemente umfassen, um das nach außen zeigende und der Umwelt ausgesetzte optische Element zu reinigen. Das Reinigungselement kann beispielsweise Wischer, Bürsten, Lippen, Düsen, Ventilatoren und ähnliche Elemente enthalten, wie sie in der europäischen Patentanmeldung Nr. 14165197.6, der US-Patentanmeldung Nr. 15 / 281,780, der deutschen Patentanmeldung Nr. 102016108247.3, der europäischen Patentanmeldung Nr. 13163677.1, der europäische Patentanmeldung Nr. 15173201.3 und dem europäisches Patent Nr. 1673260 beschrieben sind. Die Reinigungsvorrichtungen sind in ihrer Zusammensetzung nicht beschränkt und können beispielsweise beliebige Gewebe, Elastomere, Schwämme, Bürsten oder Kombinationen davon umfassen. Spezielle Wischerelemente, die Wischerarme, Wischerblätter, Wischtücher, Wischgewebe und Kombinationen davon umfassen, sind in der europäischen Patentanmeldung Nr. 14165197.6 beschrieben. Ein Wischerelement kann beispielsweise nach dem in der europäischen Patentanmeldung Nr. 130164250.6 beschriebenen Verfahren gesteuert werden. Ein Reservoir zum Halten einer Reinigungsflüssigkeit, wie in der europäischen Patentanmeldung Nr. 14165197.6 beschrieben, kann an dem Kameramodul angebracht oder in dieses integriert sein, um die Reinigungsflüssigkeit den optischen Elementen des Kameramoduls zuzuführen.

Verschiedene Verfahren können verwendet werden, um Schmutz oder andere Trübungen zu erkennen, die das Funktionieren des Kameramoduls verhindern oder verschlechtern, wie es im US-Patent Nr. 8,395,514, dem europäischen Patent Nr. 1328141, und dem US-Patent Nr. 8,031,224 beschrieben ist. Auch können Lichtquellen in das Kameramodul eingebaut oder integriert werden, um die Sichtbarkeit von umgebenden Objekten zu erhöhen, Distanzen und Richtungen zu messen und Schmutz zu erkennen, wie in dem US-Patent Nr. 8,031,224, der US-Patentanmeldung Nr. 62 / 470,658 und der US-Patentanmeldung Nr. 09 / 771,140 beschrieben.

Es ist bekannt, Heizvorrichtungen für solche Kameras bzw. Schutzgläser bereitzustellen. Hierzu werden beispielsweise Heizfolien auf das Schutzglas geklebt oder mit diesem laminiert. Eine derartige Lösung ist aufwendig in der Herstellung und besitzt aufgrund der geringen thermischen Masse einer solchen Heizfolie nur eine geringe Heizleistung. Verschiedene Heizmittel wie Heizspulen, in den Linsenhalter oder der Einfassung integrierte Heizvorrichtungen oder andere Heizelemente können verwendet werden, um Kondensation und Vereisung an der Oberfläche von optischen Elementen zu verhindern, wie beispielsweise in der deutschen Patentanmeldung Nr. 102016108247.3 und der US-Patentanmeldung Nr. 62 / 470,658.

Wasserdichte Abdichtungen gegen Witterungseinflüsse sowie gegen den Einfluss von Waschprozessen mit Waschmitteln, Lösungsmitteln und Hochdruckreinigern können am Gehäuse des Kameramoduls verwendet werden, wie zum Beispiel in der US-Patentanmeldung Nr. 13 / 090,127 beschrieben. Alternativ kann das Gehäuse aus einem Körper hergestellt sein, der aus Kunststoff und leitfähigem Material besteht, wobei das leitfähige Material in dem Kunststoffmaterial verteilt ist, um eine leitfähige Masse zu bilden, um einer Stromquelle, vorzugsweise einer Gleichspannungsquelle, zu ermöglichen, über mindestens zwei Elektroden mit dem Körper eine Verbindung einzugehen und den Körper entsprechend zu erwärmen. Eine leitende Bahn kann in Kunststoffteile des Kameramoduls eingebettet sein, wie in dem europäischen Patent Nr. 1328141 und dem US-Patent Nr. 7,083,311 beschrieben.

Bei einer Verschmutzung einer Linse oder Schutzverglasung einer Außenkamera können einem Fahrer oder Fahrerassistenzsystem nicht mehr hinreichend gute visuelle Informationen zur Verfügung gestellt werden, um einen sicheren Betrieb des Kraftfahrzeugs zu gewährleisten. Daher muss eine solche Verschmutzung erkannt und dem Fahrer gemeldet werden. Aus der DE 10 2015 217 049 A1 ist daher z.B. ein Verfahren bekannt, welches eine Außenkamera auf Verschmutzung überprüft und bei Vorliegen einer Verschmutzung eine Meldung an den Fahrer des Kraftfahrzeugs abgibt. Bei bekannten Verfahren dieser Art wird diese Information dem Fahrer in der Regel über eine Anzeige auf einer Instrumententafel des Kraftfahrzeugs übermittelt. Der Fahrer erhält die Information also erst, wenn er sich bereits im Kraftfahrzeug befindet und für den Fahrtantritt vorbereitet hat. Dies kann jedoch dazu führen, dass der Fahrer aus Bequemlichkeit darauf verzichtet, wieder aus dem Kraftfahrzeug auszusteigen und die Kamera zu reinigen, so dass die Fahrt unter verschlechterten Sicherheitsbedingungen angetreten wird.

Die JP 2012-106557 A lehrt eine Bereitstellung einer Verschmutzungsinformationsvorrichtung für eine Fahrzeugkamera, die darüber informiert, dass Verschmutzungen an der Fahrzeugkamera selbst vorliegen, wenn ein Benutzer außerhalb des Fahrzeugs vorhanden ist. In einer ECU für einen Monitor mit einem Verschmutzungspräsenz-Mittel zur Bestimmung, ob die an der außerhalb des Fahrzeugs vorgesehenen Fahrzeugkamera haftende Verschmutzung vorhanden ist oder nicht, wird das Vorhandensein der Verschmutzung durch ein Informationsmittel informiert. Wenn eine Benutzerzustandsbestimmungseinrichtung zum Bestimmen, ob die Bedingung, dass der Benutzer außerhalb des Fahrzeugs existiert, hergestellt ist oder nicht, bestimmt, dass die Bedingung, dass der Benutzer außerhalb des Fahrzeugs existiert, hergestellt ist, findet eine Verschmutzungspräsenzbestimmung statt, indem basierend auf einem aufgenommenen abgebildeten Bild die Verschmutzung im abgebildeten Bild vorhanden ist.

Die EP 3 166 302 A1 stellt eine am Fahrzeug montierte Abbildungsvorrichtung bereit, die einen Benutzer über eine Kontamination in einer Einrichtung, einem Haus oder dessen Umgebung informieren kann, in der der Benutzer dazu neigt, die Kontamination auf einer Linse oder einem Schutzglas der Linse leicht zu beseitigen. Die im Fahrzeug montierte Bildgebungsvorrichtung umfasst: eine Akkretionsdiagnoseeinheit, die einen Zustand der Kontamination diagnostiziert, der auf einer Linse der Kamerabschnitte oder auf einem Schutzglas der Linse akkretiert wurde; und eine Kontaminationsbenachrichtigungsbestimmungseinheit, die das Vorhandensein oder Fehlen einer Benachrichtigung über die Kontamination auf der Grundlage von Positionsinformationen über einen vorbestimmten Typ einer Einrichtung bestimmt, die von einer Navigationsvorrichtung mit einer Datenbank erhalten wird, die ein GPS und Karten- und Peripherieeinrichtungsinformationen eines Fahrzeugs enthält, wobei, wenn von der Akkretionsdiagnoseeinheit festgestellt wurde, dass ein Kontaminationsgrad ein Schwellenwert oder höher ist, eine Route zu einem Ziel von der Navigationsvorrichtung eingestellt wurde und von der Kontaminationsbenachrichtigungsbestimmungseinheit festgestellt wurde, dass die Einrichtung in einem vorbestimmten Entfernungsbereich von der Route existiert, die am Fahrzeug montierte Bildgebungsvorrichtung den Benutzer durch eine Anzeigevorrichtung im Fahrzeug und / oder eine Lautsprechervorrichtung benachrichtigt, dass eine Kontamination vorliegt im Fahrzeug vorgesehen.

Die EP 1 901 116 A2 beschreibt ein Kamerasystem eines kamerabasierten Analysesystems und/oder Assistenzsystems eines Fahrzeugs, umfassend eine Kamera mit einem optischen Strahlengang, der wenigstens ein optisches Element zum Leiten von Bildinformation zu einem lichtempfindlichen Bildsensor aufweist. Wenigstens ein Prüfstrahl ist in einen eingangsseitig vor dem Strahlengang angeordneten transparenten Prüfkörper einkoppelbar, und abhängig von einem Verschmutzungsgrad des Prüfkörpers ist wenigstens ein verschmutzungsindikativer Teilstrahl aus dem Prüfkörper auf einen Sensor zum Empfangen des verschmutzungsindikativen Teilstrahls lenkbar.

Ein Aspekt der DE 10 2015 209 976 A1 betrifft ein per Fernbedienung von außerhalb eines Kraftfahrzeugs bedienbares Assistenzsystem zum fahrerlosen Fahren des Kraftfahrzeugs. Vorzugsweise handelt es sich dabei um ein Parkassistenzsystem zum automatisierten Einparken des Kraftfahrzeugs in eine Kopfparklücke in Vorwärtsfahrt und/oder Rückwärtsfahrt. Das fahrzeugseitige Assistenzsystem erhält von der Fernbedienung Information zum Starten einer Sicherheitsprüfung. In Reaktion auf den Empfang der Information wird eine Sicherheitsprüfung des Fahrzeugs zumindest mit dem Sicherheitsziel des Erreichens eines sicheren Zustands des Fahrzeugs durchgeführt. Bei erfolgreicher Sicherheitsprüfung wird das fahrerlose Fahren zugelassen.

Die EP 2 682 315 A1 beschreibt eine Diagnosevorrichtung einer Schmutzentfernungsvorrichtung zum Entfernen von Schmutz einer am Fahrzeug montierten Kamera, einschließlich eines charakteristischen Mengenextraktionsteils, der eine charakteristische Menge des Bildes eines bestimmten Bereichs extrahiert, der von der Fahrzeugkamera, ein Änderungsbestimmungsteil, der einen Änderungsgrad durch Zeitreihen der extrahierten charakteristischen Größe bestimmt, und ein Diagnoseteil, der diagnostiziert, ob die Schmutzentfernungsvorrichtung des Fahrzeugs montiert ist. Die Kamera arbeitet normal oder abnormal, wenn die Schmutzentfernungsvorrichtung einen Schmutzentfernungsvorgang der Linsenoberfläche durchführt, basierend darauf, ob die ausgegebenen Betriebssignale eingegeben werden und ob der Grad der Änderungen der vom Änderungsbestimmungsteil wird unter oder über einem eingestellten Schwellenwert eingestellt.

Ferner beschreibt die WO 2016/116231 A1 eine Vorrichtung, die zum Reinigen eines Kameraobjektivs mittels eines Reinigungskopfes einen festen Reinigungskopf umfasst und eine Kamera, die mittels Antriebsmittel mobil gemacht wird, wobei der Kopf in einem Strukturelement des Fahrzeugs untergebracht ist. Die Antriebsmittel sind geeignet, um eine Relativbewegung der Kamera in Bezug auf den Reinigungskopf zwischen einer passiven Bilderfassungsposition, in der die Kamera in dem dem Reinigungskopf zugewandten Strukturelement des Fahrzeugs angeordnet ist, und einer aktiven Position zu erzeugen Dabei wird die Kamera in einem Abstand vom Strukturelement des Fahrzeugs eingesetzt, um die Bildaufnahme zu ermöglichen. Das Gerät ist besonders effektiv bei der Reinigung einer in Kraftfahrzeuge implantierten Rückfahrkamera. Des Weiteren beschreibt die DE 10 2010 046 396 A1 eine Kameraeinheit mit einem Schutzelement zur bildlichen Erfassung eines Außenbereichs für ein Kraftfahrzeug, die über ein Steuergerät mit einer innerhalb des Kraftfahrzeugs angeordneten Anzeigevorrichtung verbunden ist, wobei die Kameraeinheit in einer inaktiven Betriebsstellung mittels des Schutzelements verdeckt innerhalb einer am Kraftfahrzeug vorgesehenen Ausnehmung angeordnet ist, und die Kameraeinheit und/oder das Schutzelement nach einer Aktivierung eines ersten Betätigungselements, insbesondere durch die Aktivierung des als ersten Betätigungselement ausgebildeten Rückwärtsgangs des Kraftfahrzeugs, durch ein Antriebselement in eine aktive Betriebsstellung zur bildlichen Erfassung des Außenbereichs dienenden Freigabestellung bewegbar ist, und mindestens ein zweites Betätigungselement vorgesehen ist, wobei die Kameraeinheit und/oder das Schutzelement nach einer Aktivierung des zweiten Betätigungselements durch das Antriebselement in die zur bildlichen Erfassung des Außenbereichs geeigneten Freigabestellung bewegbar ist, wobei das zweite Betätigungselement durch den Benutzer nur außerhalb des Kraftfahrzeugs betätigbar ist.

Es ist daher die Aufgabe der vorliegenden Erfindung, ein Verfahren zum Betreiben eines Kraftfahrzeugs mit zumindest einer externen Außenrückblickvorrichtung, die zumindest einer Außenkamera umfasst, bereitzustellen, das die Sicherheit bei der Benutzung von Außenkameras in Kraftfahrzeug verbessern.

Diese Aufgabe wird gelöst durch die Merkmale von Anspruch 1.

Dabei kann vorgesehen sein, dass durch Betätigen einer Entsperreinrichtung oder Zugangskontrolleinrichtung des Kraftfahrzeugs, Berühren des Kraftfahrzeugs, insbesondere eines Türgriffs des Kraftfahrzeugs, Vorheizen oder Entfrosten zumindest eines Teils des Kraftfahrzeugs, Ausklappen und/oder Herausfahren einer Rückblickvorrichtung, die die zumindest eine Außenkamera umfasst, Ablauf einer bestimmten Zeitdauer, insbesondere seit letzter Reinigung der zumindest einen Außenkamera, Verbrauch einer bestimmten Menge an Kraftstoff des Kraftfahrzeugs, insbesondere seit letzter Reinigung der zumindest einen Außenkamera, Erfassen einer bestimmten Fahrtstrecke des Kraftfahrzeugs, insbesondere seit letzter Reinigung der zumindest einen Außenkamera, und/oder Erfassen von bestimmten Wetterbedingungen), insbesondere seit letzter Reinigung der zumindest einen Außenkamera, automatisch die Verschmutzungsbestimmung ausgelöst wird oder der Wert einer zuvor durchgeführten Verschmutzungsbestimmung aus einem Speicher ausgelesen wird. Erfindungsgemäß kann auch vorgesehen sein, dass bei der Verschmutzungsbestimmung, insbesondere unter Vergleich mit gespeicherten Daten, zumindest ein Verschmutzungsgrad bestimmt wird, vorzugsweise eine Vielzahl unterschiedlicher Verschmutzungsgrade.

Ferner wird vorgeschlagen, dass das zumindest eine Signal ein visuelles, akustisches und/oder Vibrations-Signal umfasst, wobei vorzugsweise das zumindest eine Signal ausgewählt, verändert und/oder gespeichert werden kann.

Verfahren gemäß der Erfindung können zudem gekennzeichnet sein durch Ansteuern einer Reinigungseinrichtung der zumindest einen Außenkamera bei bestimmter Verschmutzung und erkannter Inbetriebnahme und/oder in Abhängigkeit des zumindest einen Signals.

Weiterhin kann vorgesehen sein, dass zumindest eine Funktion des Kraftfahrzeugs, insbesondere Öffnen einer Tür und/oder Losfahren, blockiert wird bei bestimmter Verschmutzung und erkannter Inbetriebnahme und/oder in Abhängigkeit des zumindest einen Signals.

Auch kann ein Ansteuern einer Bewegungseinrichtung der zumindest einen Außenkamera bei bestimmter Verschmutzung und erkannter Inbetriebnahme und/oder in Abhängigkeit des zumindest einen Signals vorgesehen sein.

Jedem bestimmten Verschmutzungsgrad kann nach der Erfindung ein Signal zugeordnet werden, wobei sich vorzugsweise unterschiedliche Signale hinsichtlich ihrer Intensität, Frequenz, Taktung, Länge und/oder ihres Aussendungsorts unterscheiden.

Erfindungsgemäß wird zumindest ein erstes Signal über zumindest ein äußeres Anzeigemittels des Kraftfahrzeugs ausgegeben, wobei die zumindest eine externe Außenrückblickvorrichtung das zumindest eine äußere Anzeigemittel umfasst. Zudem kann zumindest ein zweites Signal über eine Betätigungsvorrichtung für die Entsperreinrichtung oder Zugangskontrolleinrichtung und/oder zumindest ein drittes Signal über eine Mobilfunktelefoneinrichtung und/oder ein Smartphone ausgegeben werden.

Verfahren nach der Erfindung können ferner dadurch gekennzeichnet sein, dass zumindest ein viertes Signal erzeugt wird, insbesondere bei Erfassung eines Mangels an Reinigungsflüssigkeit der Reinigungsvorrichtung und/oder Beschädigung zumindest eines Teils der Reinigungsvorrichtung.

Bei dem erfindungsgemäßen Verfahren zum Betreiben eines Kraftfahrzeugs mit zumindest einer Außenkamera wird bei einer (oder mehreren) Maßnahme(n) zur Inbetriebnahme des Kraftfahrzeugs und vor dem Einsteigen eines Fahrers in das Kraftfahrzeug geprüft, ob eine Verschmutzung der zumindest einen Außenkamera vorliegt, und bei Vorliegen einer Verschmutzung der zumindest einen Außenkamera ein Signal an den Fahrer des Kraftfahrzeugs übermittelt, welches ihn zum Reinigen der zumindest einen Außenkamera auffordert.

Der Fahrer erhält die Information über eine Verschmutzung der zumindest einen Außenkamera also bereits, bevor er im Kraftfahrzeug Platz nimmt, was ihm das unmittelbare Reinigen der zumindest einen Außenkamera erleichtert. Da es damit für den Fahrer nicht nötig ist, bei einer festgestellten Verschmutzung wieder auszusteigen, stellt ein solches Verfahren zudem einen besonders hohen Komfort in der Benutzung des Kraftfahrzeugs sicher und motiviert den Fahrer damit auch, die Fahrsicherheit vor Fahrtantritt zuverlässig herzustellen.

Gegebenenfalls kann bei der Anwendung des Verfahrens auch auf automatische Reinigungssysteme für die zumindest eine Außenkamera verzichtet werden, so dass die Herstellungskosten und das Gewicht eines zur Durchführung des Verfahrens ausgelegten Kraftfahrzeugs besonders niedrig sind. Allerdings kann das Verfahren genauso Anwendung finden, wenn solche automatischen Reinigungssysteme vorgesehen sind, beispielsweise um den Fahrer zu informieren, wenn die Verschmutzung jenseits der Reinigungsmöglichkeiten dieser Reinigungssysteme liegt.

Das Prüfen, ob eine Verschmutzung vorliegt, kann dabei beispielsweise eine Erfassung von Verschmutzungen anhand einer Analyse eines von der Kamera aufgenommenen Bildes umfassen.

Dies kann direkt bei beziehungsweise nach der Maßnahme zur Inbetriebnahme, also vor dem Fahrtantritt, erfolgen. Es ist jedoch auch möglich, dass ein solches Erfassen von Verschmutzungen auch im Fahrtbetrieb durchgeführt wird. In diesem Fall kann eine entsprechende Information in einem Speicher hinterlegt werden. Unter dem Prüfen, ob eine Verschmutzung vorliegt, soll hier daher auch verstanden werden, dass bei beziehungsweise nach der Maßnahme zur Inbetriebnahme auf diesen Speicher zugegriffen wird. Bei Vorliegen der entsprechenden Information kann dann ebenfalls das Signal an den Fahrer übermittelt werden.

Bei einer bevorzugten Ausführungsform der Erfindung wird das Prüfen, ob eine Verschmutzung der zumindest einen Außenkamera vorliegt, bei einer Betätigung einer Entsperreinrichtung oder Zugangskontrolleinrichtung des Kraftfahrzeugs durchgeführt.

Bei der Entsperr- oder Zugangskontrolleinrichtung kann es sich beispielsweise um einen Schlüssel, eine Fernbedienung oder ein Lesegerät für Magnetkarten, RFID-Elemente oder dergleichen handeln. Gerade bei der elektronischen Entsperrung mit sogenannten "keyless go"oder "keyless entry"-Systemen erfolgt die (u. U. automatische) Betätigung meist bereits, wenn der Fahrer noch einen gewissen Abstand zum Wagen hat, so dass hier besonders viel Zeit für das Prüfen auf Verschmutzungen verbleibt.

Bei einer weiteren bevorzugten Ausführungsform der Erfindung wird das Prüfen, ob eine Verschmutzung der zumindest einen Außenkamera vorliegt, bei einer Berührung eines Türgriffs des Kraftfahrzeugs durchgeführt. Dies bringt den Vorteil mit sich, dass die genaue Position des Fahrers bekannt ist. Damit kann das Signal zielgerichtet abgegeben werden, so dass andere Verkehrsteilnehmer oder Passanten möglichst wenig gestört oder beeinträchtigt werden.

Bei der Erfindung umfasst das Signal an den Fahrer ein visuelles Signal, das mittels eines äußeren visuellen Anzeigemittels des Kraftfahrzeugs übermittelt wird. Hierzu kann beispielsweise ein ohnehin vorhandenes Anzeigemittel, wie zum Beispiel ein Blinker, ein Scheinwerfer, ein Logolicht oder dergleichen benutzt werden, so dass das Verfahren keine zusätzlichen Komponenten am Kraftfahrzeug nötig macht. Nach der Erfindung ist auch eine eigene Anzeige, beispielsweise eine visuelle Anzeige an der betreffenden Außenkamera selbst, vorgesehen.

Bei einer weiteren bevorzugten Ausführungsform der Erfindung umfasst das Signal an den Fahrer ein akustisches Signal, das mittels eines äußeren akustischen Anzeigemittels des Kraftfahrzeugs übermittelt wird. Hierzu können beispielsweise vorhandene Anzeigemittel, wie eine Hupe oder ein Signalhorn, verwendet werden, so dass auch hier keine zusätzlichen Komponenten notwendig sind. Es ist hier jedoch ebenfalls möglich, gesonderte Anzeigemittel, wie zum Beispiel einen Außenlautsprecher, vorzusehen, die ebenfalls an der betreffenden Außenkamera angeordnet sein können.

Bei einer weiteren bevorzugten Ausführungsform der Erfindung umfasst das Signal an den Fahrer ein visuelles Signal, das mittels eines visuellen Anzeigemittels einer Betätigungsvorrichtung für die Entsperreinrichtung oder Zugangskontrolleinrichtung übermittelt wird. Beispielsweise kann hierfür an einem Schlüssel oder an einem Transponder für ein schlüsselloses Zugangssystem eine Anzeige vorgesehen werden. Dies ermöglicht die Übermittlung des Signals an den Fahrer mit besonders geringen Störungen für andere Personen.

Bei einer weiteren bevorzugten Ausführungsform der Erfindung wird ein weiteres Signal erzeugt, wenn eine Reinigungsflüssigkeit einer Reinigungsvorrichtung der Kamera nachgefüllt werden muss und/oder ein Wischerblatt der Reinigungsvorrichtung ausgetauscht werden muss. Auch dies trägt zur Fahrsicherheit bei, da der Fahrer so vor Fahrtantritt sicherstellen kann, dass die vorhandenen Reinigungseinrichtungen für die zumindest eine Außenkamera funktionsfähig sind, so dass während der Fahrt keine Verschlechterung des Kamerabilds auftreten kann.

Bei einer weiteren bevorzugten Ausführungsform der Erfindung wird die zumindest eine Außenkamera bei Vorliegen einer Verschmutzung in eine vorgegebene Reinigungsposition bewegt. Dies erleichtert den Zugang des Benutzers zu der zumindest einen Außenkamera und bietet daher einen besonders hohen Bedienungskomfort.

Bei einer weiteren bevorzugten Ausführungsform der Erfindung wird bei Vorliegen einer Verschmutzung der zumindest einen Außenkamera das Öffnen einer Tür des Kraftfahrzeugs blockiert. Hierdurch kann vollständig sichergestellt werden, dass ein Betrieb des Kraftfahrzeugs nur bei vollständig gereinigter und funktionsfähiger Außenkamera möglich ist, so dass die Verkehrssicherheit besonders gut gewährleistet wird.

Die Erfindung betrifft ferner einen Kraftfahrzeug nach Anspruch 13.

Dabei kann das Anzeigemittels zumindest eine Leuchte, zumindest ein Mikrophone und/oder zumindest eine Vibrationsgenerator umfassen. Kraftfahrzeug nach der Erfindung können auch gekennzeichnet durch zumindest eine Übertragungseinrichtung zum Übertragen des zumindest einen Signals an eine Entsperreinrichtung oder Zugangskontrolleinrichtung, zumindest eine Betätigungsvorrichtung für die Entsperreinrichtung oder Zugangskontrolleinrichtung und/oder zumindest eine Mobilfunktelefoneinrichtung und/oder zumindest ein Smartphone.

Erfindungsgemäß umfasst die zumindest eine externe Außenrückblickvorrichtung die zumindest eine Außenkamera und die zumindest eine äußere Anzeigemittel.

Im Folgenden werden die Erfindung und ihre Ausführungsformen anhand einer schematischen Zeichnung beispielhaft näher erläutert. Hierbei zeigt
- Fig. 1: eine Draufsicht auf ein erfindungsgemäßes Kraftfahrzeug mit zumindest einer Außenkamera und einem Schlüssel;
- Fig. 2: eine perspektivische Ansicht der Außenkamera des Kraftfahrzeugs nach Fig. 1; und
- Fig. 3: eine perspektivische Ansicht des Schlüssels von Fig. 1.

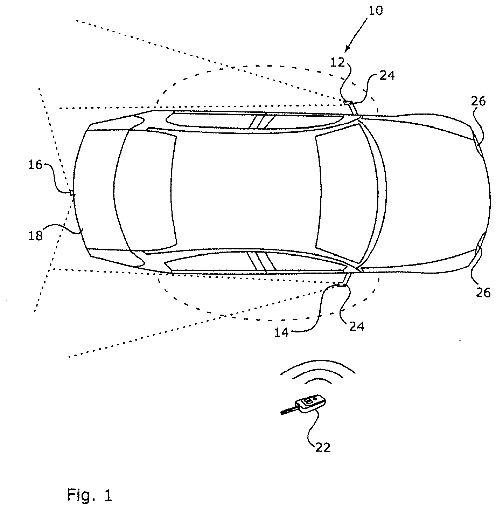

Ein in Fig. 1 im Ganzen mit 10 bezeichnetes Kraftfahrzeug weist zwei Rückblickkameras 12, 14 auf, von denen jeweils eine auf der Fahrerseite und Beifahrerseite des Kraftfahrzeugs 10 angeordnet ist. Eine weitere Kamera 16 ist am Heck 18 des Kraftfahrzeugs 10 angebracht, um dem Fahrer bei der Rückwärtsfahrt des Kraftfahrzeugs 10 zusätzliche visuelle Informationen zu übermitteln.

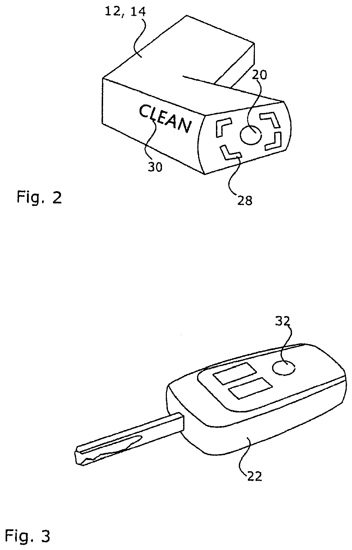

Die Rückblickkameras 12, 14, die in Fig. 2 im Detail dargestellt sind, sind beweglich ausgestaltet, so dass sie zwischen der in Fig. 1 gezeigten Betriebsposition und einer Ruheposition, in der sie hinter einer Außenverkleidung des Kraftfahrzeugs versenkt sind, verfahren werden können. Die Signale der Kameras 12, 14, 16 werden mittels einer Datenverarbeitungseinrichtung verarbeitet und im Betrieb des Kraftfahrzeugs 10 auf entsprechenden Anzeigen im Innenraum des Kraftfahrzeugs 10 visuell dargestellt.

Die Datenverarbeitungseinrichtung kann dabei mittels gängiger Bildverarbeitungs- bzw. Bildauswertungsverfahren erkennen, wenn eine Verschmutzung einer Linse 20 einer der Kameras 12, 14, 16 vorliegt. Dass eine Verschmutzung vorliegt, welche eine Reinigung notwendig macht, wird in an sich bekannter Weise an einem vorbestimmten Verschmutzungsgrad und/oder dem Vorliegen einer vorbestimmten Art von Verschmutzung erkannt. Wird eine solche Verschmutzung erkannt, so kann eine entsprechende Information in einem Speicher der Datenverarbeitungseinrichtung hinterlegt werden.

Wenn erkannt wird, dass der Fahrer eine Inbetriebnahme des Kraftfahrzeugs 10 plant, beispielsweise durch Betätigung eines Transponders oder Schlüssels 22, oder auch nur durch das Berühren eines Türgriffs des Kraftfahrzeugs 10, wird erfindungsgemäß geprüft, ob eine (vorbestimmte) Verschmutzung vorliegt. Dies kann durch Abfrage des genannten Speichers erfolgen. Es ist jedoch auch möglich, erst zu diesem Zeitpunkt eine direkte Erkennung von Verschmutzungen der Linse 20 durch Bildverarbeitung vorzunehmen.

Liegt eine Verschmutzung vor, so wird der Fahrer mittels eines Signals darauf hingewiesen, dass die Linse 20 gereinigt werden sollte, noch bevor er eine Tür des Kraftfahrzeugs 10 öffnet oder in diesem Platz nimmt. Dies kann beispielsweise visuell durch einen in einer der Rückblickkameras 12, 14 angeordneten Blinker 24 erfolgen Es ist auch möglich, entsprechende zusätzliche Anzeigen am Kraftfahrzeug 10 anzubringen, beispielsweise an einem Türgriff oder an einer Radkappe.

Das optische Signal kann je nach Verschmutzungsgrad in unterschiedlichen Farben aufscheinen, wobei Rot für "verdreckt" und Grün für "sauber" verwendet werden können.

Wie in Fig. 2 gezeigt, können auch an den Kameras 12, 14, 16 selbst Anzeigeelemente vorgesehen sein, beispielsweise in Form von blinkenden oder blitzenden Leuchten 28 im Bereich der Linse 20, die bspw. in unterschiedlichen Farben aufleuchten können, oder auch in Form eines aufleuchtenden Schriftzugs 30, der den Fahrer zur Reinigung auffordert. Auch am Schlüssel 22 oder einem Transponder kann eine Hinweisleuchte 32 angebracht werden, die den Fahrer entsprechend informiert.

Die Farben und der Schriftzug können individualisiert sein oder werden, so dass jeder Fahrer die ihm am ansprechendste Konfiguration erhält.

Zusätzlich kann auch ein akustischer Hinweis ausgegeben werden. Dies kann beispielsweise über einen Außenlautsprecher des Kraftfahrzeugs 10, über dessen Hupe oder mittels eines Lautsprechers oder Summers im Schlüssel 22 oder über ein Smartphone erfolgen. Genauso kann auch ein Vibrationsalarm an dem Schlüssel 22 oder auch dem Smartphone oder einer sonstigen Mobilfunktelefoneinrichtung gegeben werden.

Der Fahrer erhält somit eine Aufforderung, vor dem Fahrtantritt die Linse 20 zu reinigen, um einen sicheren Betrieb des Kraftfahrzeugs 10 zu gewährleisten. Hierzu kann ein Reinigungselement, beispielsweise ein Pinsel, ein Reinigungstuch, eine Wischlippe, ein Reinigungsspray oder dergleichen, in den Schlüssel 22 integriert werden. Es ist auch möglich, in einem Gehäuse oder im Nahbereich der Kamera 12, 14, 16 ein Aufbewahrungsfach für ein solches Reinigungselement vorzusehen, so dass das Reinigungselement schnell und einfach zur Hand ist.

Um die Reinigung zu erleichtern, kann sich die Kamera 12, 14, 16 auch in eine vorgegebene Reinigungsposition bewegen, um so beispielsweise die Linse 20 für den Fahrer leichter zugänglich zu machen und die Reinigung komfortabler zu gestalten.

Auf die beschriebene Art kann ferner auch ein zusätzliches Signal ausgegeben werden, wenn ein vorhandenes Reinigungssystem für eine der Kameras 12, 14, 16 wartungsbedürftig ist und beispielsweise neue Reinigungsflüssigkeit oder den Austausch eines Wischerblattes benötigt.

Es ist ferner auch möglich, dass nach Erkennen einer Verschmutzung der Linse 20 eine Tür des Kraftfahrzeugs blockiert wird, bis die Verschmutzung beseitigt ist, um so sicherzustellen, dass der Fahrer die Linse 20 reinigen muss, bevor er die Fahrt antreten kann.

Insgesamt werden so ein Verfahren und ein Kraftfahrzeug 10 geschaffen, welche einen besonders komfortablen und sicheren Betrieb des Kraftfahrzeugs 10 ermöglichen.

### Bezugszeichen:

- 10: Kraftfahrzeug
- 12: Rückblickkamera
- 14: Rückblickkamera
- 16: Kamera
- 18: Heck
- 20: Linse
- 22: Schlüssel
- 24: Blinker
- 26: Scheinwerfer
- 28: Leuchte
- 30: Schriftzug
- 32: Hinweisleuchte

## Patentansprüche

1. Verfahren zum Betreiben eines Kraftfahrzeugs (10) mit zumindest einer externen Außenrückblickvorrichtung, die zumindest eine Außenkamera (12, 14, 16) umfasst, mit folgenden Schritten:
• Erkennen, ob eine Inbetriebnahme des Kraftfahrzeugs (10) vor dem Einsteigen eines Fahrers in das Kraftfahrzeug (10) geplant ist, durch Erkennen, ob eine Maßnahme zur Inbetriebnahme des Kraftfahrzeugs, umfassend insbesondere Betätigung eines Transponders oder Schlüssels (22), oder durch das Berühren eines Türgriffs des Kraftfahrzeugs (10), vorgenommen wird,
• auf das positive Erkennen nachfolgendes
• Bestimmen vor dem Einstigen des Fahrers in das Kraftfahrzeug, ob eine Verschmutzung mit einem vorbestimmten Verschmutzungsgrad und/oder einer vorbestimmten Art der Verschmutzung der zumindest einen Außenkamera (12, 14, 16) vorliegt, und
• Ausgeben zumindest eines Signals, das bei Vorliegen der Verschmutzung den Fahrer zum Reinigen der zumindest einen Außenkamera auffordert, bevor der Fahrer eine Tür des Kraftfahrzeugs (10) öffnet oder in diesem Platz nimmt, **dadurch gekennzeichnet, dass**
das zumindest eine Signal zumindest ein erstes Signal umfasst,
das erste Signal über zumindest ein äußeres Anzeigemittel (24, 26, 28, 30) des Kraftfahrzeugs (10) ausgegeben wird, und
die zumindest eine externe Außenrückblickvorrichtung das zumindest eine äußere Anzeigemittel (24, 26, 28, 30) umfasst.

2. Verfahren nach Anspruch 1, **dadurch gekennzeichnet, dass** durch
• Betätigen einer Entsperreinrichtung oder Zugangskontrolleinrichtung des Kraftfahrzeugs (10),
• Berühren eines Türgriffs des Kraftfahrzeugs (10),
• Vorheizen oder Entfrosten zumindest eines Teils des Kraftfahrzeugs (10), und/oder
• Ausklappen und/oder Herausfahren einer Rückblickvorrichtung automatisch die Verschmutzungsbestimmung ausgelöst oder
der Wert einer zuvor durchgeführten Verschmutzungsbestimmung aus einem Speicher ausgelesen wird.

3. Verfahren nach Anspruch 2, **dadurch gekennzeichnet, dass** die Verschmutzungsbestimmung auch durch
• Ablauf einer Zeitdauer,
• Verbrauch einer bestimmten Menge an Kraftstoff des Kraftfahrzeugs (10),
• Erfassen einer bestimmten Fahrtstrecke des Kraftfahrzeugs (10), und/oder
• Erfassen von bestimmten Wetterbedingungen),
ausgelöst werden kann.

4. Verfahren nach einem der voranstehenden Ansprüche, **dadurch gekennzeichnet, dass** bei der Verschmutzungsbestimmung unter Vergleich mit gespeicherten Daten, zumindest ein Verschmutzungsgrad bestimmt wird.

5. Verfahren nach einem der vorangehenden Ansprüche, **dadurch gekennzeichnet, dass** das zumindest eine Signal ein visuelles, akustisches und/oder Vibrations-Signal umfasst,
wobei vorzugsweise das zumindest eine Signal ausgewählt, verändert und/oder gespeichert werden kann.

6. Verfahren nach einem der vorangehenden Ansprüche, **gekennzeichnet durch** Ansteuern einer Reinigungseinrichtung der zumindest einen Außenkamera (12, 14, 16)
bei bestimmter Verschmutzung und erkannter Inbetriebnahme und/oder in Abhängigkeit des zumindest einen Signals.

7. Verfahren nach einem der vorangehenden Ansprüche, **dadurch gekennzeichnet, dass** zumindest eine Funktion des Kraftfahrzeugs (10), insbesondere Öffnen einer Tür und/oder Losfahren, blockiert wird
bei bestimmter Verschmutzung und erkannter Inbetriebnahme und/oder in Abhängigkeit des zumindest einen Signals.

8. Verfahren nach einem der vorangehenden Ansprüche, **gekennzeichnet durch** Ansteuern einer Bewegungseinrichtung der zumindest einen Außenkamera (12, 14, 16)
bei bestimmter Verschmutzung und erkannter Inbetriebnahme und/oder in Abhängigkeit des zumindest einen Signals.

9. Verfahren nach einem der Ansprüche 4 bis 8, **dadurch gekennzeichnet, dass** jedem bestimmten Verschmutzungsgrad ein Signal zugeordnet wird,
wobei sich vorzugsweise unterschiedliche Signale hinsichtlich ihrer Intensität, Frequenz, Taktung, Länge, Farbe und/oder ihres Aussendungsorts unterscheiden.

10. Verfahren nach einem der vorangehenden Ansprüche, **dadurch gekennzeichnet, dass** das zumindest eine Signal zumindest ein zweites Signal umfasst, das über eine Betätigungsvorrichtung (22) für die Entsperreinrichtung oder Zugangskontrolleinrichtung ausgegeben wird, und/oder
das zumindest eine Signal zumindest ein drittes Signal umfasst, das über eine Mobilfunktelefoneinrichtung und/oder ein Smartphone ausgegeben wird.

11. Verfahren nach Anspruch 10, **dadurch gekennzeichnet, dass**
das Anzeigeelement eine Hinweisleuchte (32) an einem Schlüssel (22) oder Transponder ist.

12. Verfahren nach einem der vorangehenden Ansprüche, **dadurch gekennzeichnet, dass** das zumindest eine Signal zumindest ein viertes Signal umfasst, das bei Erfassung eines Mangels an Reinigungsflüssigkeit der Reinigungsvorrichtung und/oder Beschädigung zumindest eines Teils der Reinigungsvorrichtung erzeugt wird.

13. Kraftfahrzeug (10) mit zumindest einer externen Außenrückblickvorrichtung, die das zumindest eine äußere Anzeigemittel (24, 26, 28, 30) und die zumindest eine Außenkamera (12, 14, 16) umfasst, und einer Steuer- oder Regeleinrichtung, welche zum Durchführen eines Verfahrens nach einem der vorangehenden Ansprüche ausgelegt ist.

14. Kraftfahrzeug nach Anspruch 13, **dadurch gekennzeichnet, dass** das Anzeigemittel (24, 26, 28, 30) zumindest eine Leuchte, zumindest ein Mikrophone und/oder zumindest eine Vibrationsgenerator umfasst.

15. Kraftfahrzeug nach Anspruch 13 oder 14, **gekennzeichnet durch** zumindest eine Übertragungseinrichtung zum Übertragen des zumindest einen Signals an
• eine Entsperreinrichtung oder Zugangskontrolleinrichtung,
• zumindest eine Betätigungsvorrichtung (22) für die Entsperreinrichtung oder Zugangskontrolleinrichtung und/oder
• zumindest eine Mobilfunktelefoneinrichtung und/oder zumindest ein Smartphone.

## Claims

1. A method for operating a motor vehicle (10) having at least one outer exterior rear-view device comprising at least one exterior camera (12, 14, 16), having the steps of:
• detecting whether putting the motor vehicle (10) into operation before a driver enters the motor vehicle (10) is planned by detecting whether a measure for putting the motor vehicle into operation is being carried out comprising, in particular, actuating a transponder or key (22) or touching a door handle of the motor vehicle (10),
• following a positive detection:
• determining, before the driver enters the motor vehicle, whether there is a dirt contamination of a predefined degree of dirt contamination and/or of a predefined type of dirt contamination on the at least one exterior camera (12, 14, 16), and
• outputting at least one signal that, in the event of dirt contamination, requests the driver to clean the at least one exterior camera before the driver opens a door of the motor vehicle (10) or takes a seat therein,
**characterized in that**
the at least one signal comprises at least one first signal,
the first signal is outputted via at least one exterior display means (24, 26, 28, 30) of the motor vehicle (10), and
the at least one outer exterior rear-view device comprises the at least one exterior display means (24, 26, 28, 30).

2. The method of Claim 1, **characterized in that** by
• actuating an unlocking apparatus or access control apparatus of the motor vehicle (10),
• touching a door handle of the motor vehicle (10),
• preheating or de-icing at least a part of the motor vehicle (10), and/or
• swinging out and/or extending a rear-view device,
the determination of dirt contamination is automatically triggered, or the value of a previously performed determination of dirt contamination is read out from a memory.

3. The method of Claim 2, **characterized in that** the determination of dirt contmination may also be triggered by
• the expiry of a time period,
• the consumption of a particular amount of fuel of the motor vehicle (10),
• the acquisition of a particular distance travelled by the motor vehicle (10), and/or
• the detection of particular weather conditions.

4. The method of any one of the preceding claims, **characterized in that**
when dirt contamination is determined, at least one degree of dirt contamination is determined by performing a comparison with stored data.

5. The method of any one of the preceding claims, **characterized in that**
the at least one signal comprises a visual, an acoustic, and/or a vibrational signal,
wherein, preferably, the at least one signal may be selected, changed, and/or stored.

6. The method of any one of the preceding claims, **characterized by**
controlling a cleaning apparatus of the at least one exterior camera (12, 14, 16) in the event of a determined dirt contamination and a detected putting into operation, and/or depending on the at least one signal.

7. The method of any one of the preceding claims, **characterized in that**
at least one function of the motor vehicle (10), in particular opening a door and/or driving off, is blocked in the event of a determined dirt contamination and a detected putting into operation, and/or depending on the at least one signal.

8. The method of any one of the preceding claims, **characterized by**
controlling a moving apparatus of the at least one exterior camera (12, 14, 16) in the event of a determined dirt contamination and a detected putting into operation, and/or depending on the at least one signal.

9. The method of any one of Claims 4 to 8, **characterized in that**
a signal is assigned to each determined degree of dirt contamination,
wherein, preferably, different signals differ from each other with respect to their intensity, frequency, timing, length, colour, and/or place of emission.

10. The method of any one of the preceding claims, **characterized in that**
the at least one signal comprises at least one second signal that is outputted via an actuating device (22) for the unlocking apparatus or access control apparatus, and/or
the at least one signal comprises at least one third signal that is outputted via a mobile wireless phone apparatus and/or a smartphone.

11. The method of Claim 10, **characterized in that**
the display element is an indicating light (32) on a key (22) or transponder.

12. The method of any one of the preceding claims, **characterized in that**
the at least one signal comprises at least one fourth signal that is generated in the event of a detection of a lack of cleaning liquid of the cleaning apparatus, and/or
in the event of a damage to at least a part of the cleaning apparatus.

13. A motor vehicle (10) having at least one outer exterior rear-view device that comprises the at least one exterior display means (24, 26, 28, 30) and the at least one exterior camera (12, 14, 16), and having an apparatus for control or automatic control that is adapted to perform a method of any one of the preceding claims.

14. The motor vehicle of Claim 13, **characterized in that**
the display means (24, 26, 28, 30) comprises at least one light, at least one microphone, and/or at least one vibration generator.

15. The motor vehicle of claim 13 or 14, **characterized by**
at least one transmission apparatus for transmitting the at least one signal to
• an unlocking apparatus or access control apparatus,
• at least one actuating device (22) for the unlocking apparatus or access control apparatus, and/or
• at least one mobile wireless phone apparatus and/or at least one smartphone.

## Revendications

1. Procédé pour faire fonctionner un véhicule à moteur (10) pourvu d'au moins un dispositif de rétrovision extérieure externe, qui comprend au moins une caméra extérieure (12, 14, 16), comprenant les étapes suivantes :
• l'identification de si une mise en marche du véhicule à moteur (10) est prévue avant qu'un conducteur ne monte dans le véhicule à moteur (10), par identification de si une mesure pour la mise en marche du véhicule à moteur, comprenant notamment l'actionnement d'un transpondeur ou d'une clé (22), ou par le contact d'une poignée de porte du véhicule à moteur (10), est effectuée,
• l'identification positive est suivie de
• la détermination, avant que le conducteur ne monte dans le véhicule à moteur, de si une salissure ayant un degré de salissure prédéterminé et/ou un type de salissure prédéterminé de l'au moins une caméra extérieure (12, 14, 16) est présente, et
• l'émission d'au moins un signal qui, en présence de la salissure, invite le conducteur à nettoyer l'au moins une caméra extérieure avant que le conducteur n'ouvre une porte du véhicule à moteur (10) ou ne prenne place dans celui-ci, **caractérisé en ce que** l'au moins un signal comprend au moins un premier signal, le premier signal est émis par le biais d'au moins un moyen d'affichage extérieur (24, 26, 28, 30) du véhicule à moteur (10), et
l'au moins un dispositif de rétrovision extérieure externe comprend l'au moins un moyen d'affichage extérieur (24, 26, 28, 30).

2. Procédé selon la revendication 1, **caractérisé en ce que** par
• actionnement d'un appareil de déverrouillage ou d'un appareil de contrôle d'accès du véhicule à moteur (10),
• contact avec une poignée de porte du véhicule à moteur (10),
• préchauffage ou dégivrage d'au moins une partie du véhicule à moteur (10), et/ou
• déploiement et/ou sortie d'un dispositif de rétrovision
la détermination de la salissure est déclenchée automatiquement ou la valeur d'une détermination de la salissure réalisée précédemment est lue à partir d'une mémoire.

3. Procédé selon la revendication 2, **caractérisé en ce que** la détermination de la salissure peut également être déclenchée par
• écoulement d'une période de temps,
• consommation d'une quantité déterminée de carburant du véhicule à moteur (10),
• détection d'un trajet déterminé du véhicule à moteur (10), et/ou
• détection de certaines conditions météorologiques.

4. Procédé selon l'une quelconque des revendications précédentes, **caractérisé en ce que**, lors de la détermination de la salissure, au moins un degré de salissure est déterminé par comparaison avec des données enregistrées.

5. Procédé selon l'une quelconque des revendications précédentes, **caractérisé en ce que** l'au moins un signal comprend un signal visuel, acoustique et/ou vibratoire, dans lequel, de préférence, l'au moins un signal peut être sélectionné, modifié et/ou enregistré.

6. Procédé selon l'une quelconque des revendications précédentes, **caractérisé par** la commande d'un appareil de nettoyage de l'au moins une caméra extérieure (12, 14, 16) lorsqu'une salissure est déterminée et qu'une mise en marche est identifiée et/ou en fonction de l'au moins un signal.

7. Procédé selon l'une quelconque des revendications précédentes, **caractérisé en ce qu'**au moins une fonction du véhicule à moteur (10), notamment l'ouverture d'une porte et/ou le démarrage, est bloquée lorsqu'une salissure est déterminée et qu'une mise en marche est identifiée et/ou en fonction de l'au moins un signal.

8. Procédé selon l'une quelconque des revendications précédentes, **caractérisé par** la commande d'un appareil de déplacement de l'au moins une caméra extérieure (12, 14, 16) lorsqu'une salissure est déterminée et qu'une mise en marche est identifiée et/ou en fonction de l'au moins un signal.

9. Procédé selon l'une quelconque des revendications 4 à 8, **caractérisé en ce qu'**un signal est associé à chaque degré de salissure déterminé,
dans lequel, de préférence, différents signaux se distinguent par leur intensité, leur fréquence, leur cadence, leur longueur, leur couleur et/ou leur lieu d'émission.

10. Procédé selon l'une quelconque des revendications précédentes, **caractérisé en ce que** l'au moins un signal comprend au moins un deuxième signal, qui est émis par le biais d'un dispositif d'actionnement (22) pour l'appareil de déverrouillage ou l'appareil de contrôle d'accès, et/ou
l'au moins un signal comprend au moins un troisième signal, qui est émis par le biais d'un appareil de téléphonie mobile et/ou d'un smartphone.

11. Procédé selon la revendication 10, **caractérisé en ce que**
l'élément d'affichage est un voyant indicateur (32) sur une clé (22) ou un transpondeur.

12. Procédé selon l'une quelconque des revendications précédentes, **caractérisé en ce que** l'au moins un signal comprend au moins un quatrième signal, qui est généré lors de la détection d'un manque de liquide de nettoyage du dispositif de nettoyage et/ou d'un endommagement d'au moins une partie du dispositif de nettoyage.

13. Véhicule à moteur (10) pourvu d'au moins un dispositif de rétrovision extérieure externe, qui comprend l'au moins un moyen d'affichage extérieur (24, 26, 28, 30) et l'au moins une caméra extérieure (12, 14, 16), et un appareil de commande ou de régulation, qui est conçu pour réaliser un procédé selon l'une quelconque des revendications précédentes.

14. Véhicule à moteur selon la revendication 13, **caractérisé en ce que**
le moyen d'affichage (24, 26, 28, 30) comprend au moins un voyant, au moins un microphone et/ou au moins un générateur de vibrations.

15. Véhicule à moteur selon la revendication 13 ou 14, **caractérisé par** au moins un appareil de transmission pour transmettre l'au moins un signal à
• un appareil de déverrouillage ou un appareil de contrôle d'accès,
• au moins un dispositif d'actionnement (22) pour l'appareil de déverrouillage ou l'appareil de contrôle d'accès et/ou
• au moins un appareil de téléphonie mobile et/ou au moins un smartphone.
